# EUROPEAN PATENT APPLICATION

(11) **EP 3 483 093 A1**
(43) Date of publication of application: **15.05.2019**
(21) Application number: 18206075.6
(22) Date of filing: 13.11.2018
(51) Int. Cl.: B65G 1/137

(54) **LIGHT INDICATING DEVICE FOR AN AUTOMATED WAREHOUSE PICKING/DEPOSITING STATION**

(30) Priority: 14.11.2017 IT 201700129984
(71) Applicant: ICAM S.r.l., 70017 Putignano (BA) (IT)
(72) Inventor: VECCARO, Angelantonio, 70017 PUTIGNANO (BA) (IT); DIOMEDE, Francesco, 70017 PUTIGNANO (BA) (IT); BIANCO, Giuseppe Ernesto, 70017 PUTIGNANO (BA) (IT); BIANCO, Roberto, 70017 PUTIGNANO (BA) (IT)
(74) Representative: Lovino, Paolo

(57) **Abstract**

A light indicating device (16) for a picking/depositing station (2) of an automated warehouse (1) has first and second light sources, which are fixed and are turned on/off by a control unit (30); the first light sources (20b) are arranged along a first row (21) and are configured so as to respectively emit first flat light beams (18b), which are parallel to one another and transversal to the first row (21); the second light sources (20a) are arranged along a second row (22), which is transversal to the first row (21), and are configured so as to respectively emit second flat light beams (18b), which are parallel to one another and transversal to the second row (22); the control unit (30) is configured so as to turn on at least one of the first light sources (20b) and at least one of the second light sources (20a) in order to respectively display a first line of light (25b) and a second line of light (26b) on a surface, which, in use, is arranged in a position facing the light indicating device (16).

## Description

### CROSS-REFERENCE TO RELATED APPLICATIONS

This patent application claims priority from Italian patent application no. 102017000129984 filed on 14/11/2017.

### TECHNICAL FIELD

The invention relates to a light indicating device for a picking/depositing station of an automated warehouse, in particular for a warehouse.

### BACKGROUND ART

Automated warehouses typically comprise a storing area provided with racks to support a plurality of loading units or trays, which, in turn, are provided with compartments to separate the stored articles, for example based on the type of articles.

The warehouse has one or more bays or picking/depositing stations, which are configured to receive and support at least one of the aforesaid loading units, thus making it accessible to users, so that they can perform article picking and depositing operations, from and to the loading unit, respectively.

The warehouse is controlled by an electronic control unit, which is configured so as to store codes and possible further items of information concerning the stored articles, as well as their location in the compartments of the different loading units. Furthermore, said unit is programmed to control the transfer of the loading units between the storing area and the picking/depositing station, as well as to manage the spaces of the warehouse, for example identifying the loading units and the most suitable compartments for the deposit of new articles.

In some cases, the picking/depositing stations comprise light indicating devices, which are usually arranged on a ceiling of the station and are controlled by the aforesaid control unit, so as to emit light rays indicating to users the compartments in which to perform the picking/depositing operations.

According to some known solutions, the light indicating device comprises a matrix of punctiform light sources, for example LEDs, arranged according to a rectangular grid on the ceiling of the station, so that each compartment of the loading unit can be lit by means of a corresponding light ray, which is oriented vertically.

JP4330956 describes a light indicating device, which is movable along two horizontal directions, which are orthogonal to one another, and projects two orthogonal lines so as to form a light cross above the article or the compartment to be accessed.

This last solution allows manufacturers to reduce the number of light sources, compared to the grid described above, but requires actuators and a relative control system to move the device. As a matter of fact, generally speaking, the devices comprising movable parts turn out to be intrinsically less reliable and more expensive.

### DISCLOSURE OF INVENTION

The object of the invention is to provide a light indicating device for a picking/depositing station of a warehouse, in particular an automated warehouse, which is capable of solving the aforementioned drawbacks and, in particular, can offer an optimal compromise between the known solutions discussed above, without for this reason loosing in signalling effectiveness compared to such known solutions.

According to the invention, the aforesaid object is reached by carrying out a light indicating device for a picking/depositing station of an automated warehouse, as defined in claim 1.

### BRIEF DESCRIPTION OF THE DRAWINGS

The invention will now be described with reference to the accompanying drawings, which show a non-limiting embodiment thereof, wherein:
- figure 1 shows, in perspective, in a partial and simplified manner, an automated vertical warehouse having at least one picking/depositing station provided with a preferred embodiment of the light indicating device according to the invention;
- figure 2 is a perspective view, on a larger scale, of the picking/depositing station of figure 1;
- figure 3 is a view from the bottom, in a schematic manner, of the light indicating device of figures 1 and 2;
- figure 4 shows, from the top, the light signal obtained on the compartments of a loading unit arranged in the picking/depositing station.

### BEST MODE FOR CARRYING OUT THE INVENTION

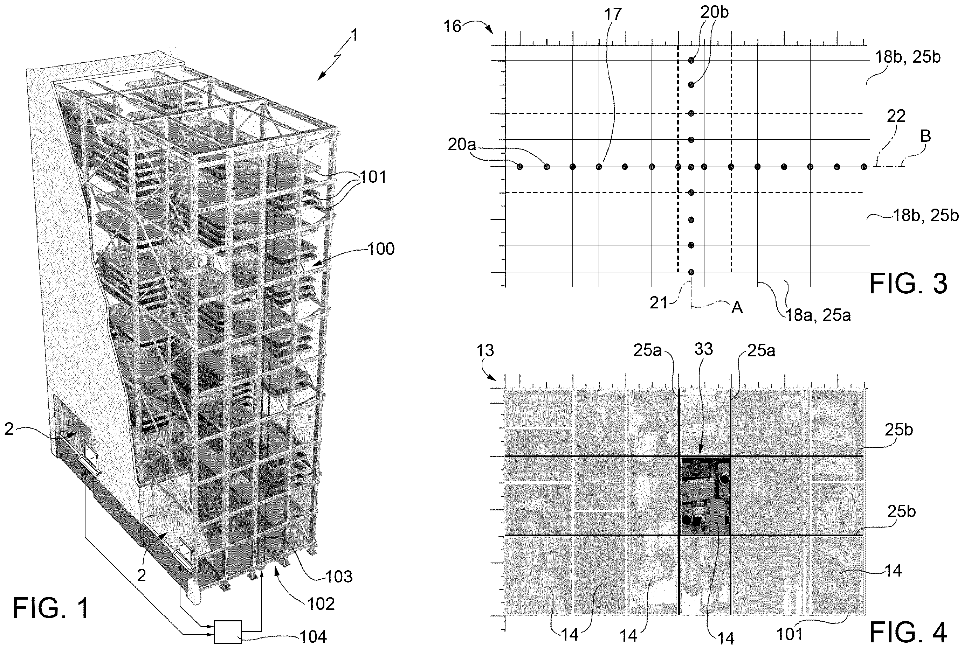

In figure 1, reference number 1 indicates, as a whole, an automated warehouse (which is partially shown) comprising a storing area 100 having a plurality of predefined positions where to store respective loading units 101, which are defined, in particular, by translating trays. The warehouse 1 further comprises one or more picking/depositing stations 2, which define respective points of access to the warehouse 1, as they allow one or more users to pick up and/or deposit articles in the loading units 101.

The storing area 100 has at least one alley 102 to allow the transit of at least one moving device defined, in particular, by a lifting device 103 (of which only a vertical track is shown) and being configured so as to move the loading units 101 between their positions and the station 2.

The warehouse 1 further comprises an electronic control and management unit 104 (schematically shown) configured, through proper computer programs, so as to perform the usual managing operations of product storing (for example, controlling the transportation of the loading units 101 based on controls and/or settings of the user; choosing the loading unit 101 to be sent to the station 2 based on optimization strategies; giving instructions or other items of information to the user; monitoring the state of stocks; etc.).

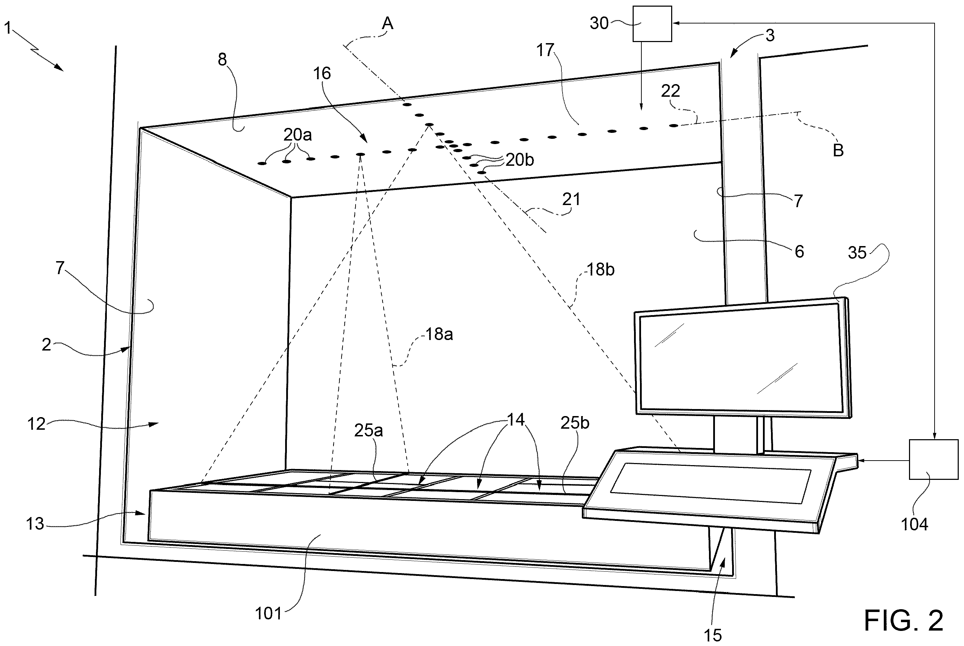

With reference to figure 2, the station 2 comprises a fixed structure 3, which preferably comprises a vertical rear wall 6, which is orthogonal to a horizontal axis A, and two vertical sides 7, which are spaced apart from one another along a horizontal axis B, which is transversal to the axis A.

The fixed structure 3 further comprises an upper wall or ceiling 8, which, in the particular example shown, is flat and horizontal. Preferably, the ceiling 8 is rectangular or squared. More preferably, the axis A and the axis B are symmetry axis for the ceiling 8.

The fixed structure 3 delimits a compartment 12, which is open at the front so that it can be accessed by a user. A lower area of the compartment 12 defines a seat 13 having dimensions that are such as to house at least one loading unit 101, between the sides 7 and in a position vertically facing the ceiling 8, to pick up articles form said loading unit 101 and/or to deposit articles in said loading unit 101.

According to a not shown variant, the seat 13 provided to house the loading unit 101 is separate from the compartment 12 by means of at least one shutter and/or at least one safety door, which are normally closed and are opened by the unit 104 to allow the user to access given parts of the loading unit 101 or the entire loading unit 101. In particular, the loading unit 101 is divided into a plurality of compartments 14, which are separate from one another, so as to contain different types of articles. For example, according to figure 4, each one of the compartments 14 has a size that is different from that of the other ones and contains one or more articles of the same type.

The station 2 preferably comprises a support device 15, which is coupled to the fixed structure 3 or is part of the fixed structure 3 and, after having received the loading unit 101 from the device 103 in a known and not shown manner, supports the same loading unit 101 in a fixed position in the seat 13 so as to carry out the article picking/depositing operations.

Preferably, the support device 15 comprises a pair of linear guides (not shown), for example defined by respective channels, which are carried by the sides 7 and can be engaged by the loading unit 101 in a sliding manner. According to an alternative shown in figure 2, the support device 15 comprises a bearing plane, which is defined, for example, by a lower wall of the seat 13. According to a further not shown variant, the loading unit 101 is directly held in a fixed position in the seat 13 by the device 103.

Advantageously, the loading unit 101 is held in the seat 13 in a horizontal position, namely in a position parallel to the ceiling 8.

The station 2 comprises a light indicating device 16, which emits light beams from the top towards the loading unit 101 in use, so as to signal to the user a compartment 14 to be accessed in order to pick up or deposit articles.

The device 16 comprises a frame or support elements 17, which are fixed to the structure 3 or are part of the structure 3 and support, in fixed positions, a plurality of light sources 20 having constructive features that are such as to emit respective light beams configured like a fan or like a light blade, namely light beams lying on respective planes and, hence, such as to project respective lines of light onto any surface that is arranged in a position facing the device 16. In other words, the light beams emitted by the sources 20, when they intercept such surface, form respective lines of light suited to give a light indication to the user.

The light beam emitted by each source 20 can be defined by a continuous light blade or it can consist of a set or rays projected in a fan-like manner so as to lie, anyway, on a plane. The points formed by these rays basically form a line of light, even if they are slightly spaced apart from one another.

Preferably, each one of the sources 20 preferably has constructive features that are such as to project a so-called laser line onto the surface intercepted by the emitted light beams. For example, the sources 20 are of the type commonly known as "laser line generator". According to an alternative, the sources 20 are of the type commonly known as "structured light generator" and use Powell's lenses.

In the preferred embodiment shown, the sources 20 are arranged in the area of the ceiling 8.

The sources 20 are arranged along at least two rows 21 and 22, which are transversal to one another. In particular, the row 21 is straight and parallel to the axis A, whereas the row 22 is straight and parallel to the axis B. According to the preferred embodiment shown, the device 16 only has the two rows 21, 22. In particular, the row 21 is arranged along the axis A and the row 22 is arranged along the axis B so as to form a cross with the row 21.

The light sources arranged along the row 22 are indicated by reference number 20a and are configured so as to emit light beams 18a which are flat, parallel to one another and transversal to the row 22. Preferably, the light beams 18a are vertical and parallel to the axis A. The lines of light projected onto the loading unit 101 by the sources 20a, by means of the light beams 18a, are indicated by reference number 25a.

On the other hand, the light sources arranged along the row 21 are indicated by reference number 20b and are configured so as to emit light beams 18b which are flat, parallel to one another and transversal to the row 21 itself. Preferably, the light beams 18b are vertical and parallel to the axis B. The lines of light projected onto the loading unit 101 by the sources 20b, by means of the light beams 18b, are indicated by reference numbers 25b.

Evidently, the light beams 18a and 18b intersect one another in the compartment 12 as well as the lines of light 25a intersect the lines of light 25b on the upper surface of the loading unit 101 so as to have the possibility of forming a grid of lines of light on said surface. Such grid is schematically represented in figure 3, together with notches that, by way of example, symbolize the distance relative to a reference origin: this origin and these distances are non actually visible, but are stored in a control unit 30 and are associated with the dimensions of the loading unit 101 so as to define, in terms of Cartesian coordinates, the position of the lines of light 25a, 25b that are projected onto said loading unit 101.

The distance between two contiguous sources 20b along the row 21 and/or the distance between two contiguous sources 20a along the row 22 conveniently is constant and depends on the dimensions of the loading unit 101, on the dimensions and on the number of the compartments 14 in such loading unit 101 and on the desired resolution for the aforesaid grid that can be projected by the device 16.

The above-mentioned control unit 30 is part of the unit 104 or is a dedicated device communicating with the unit 104. The unit 30 is configured by means of proper programs so as to control the turning on and the turning off of the sources 20a, 20b for the purpose of signalling to the user which compartment 14 is to be accessed in order to perform the picking/depositing operations.

The unit 30 simultaneously turns on at least one of the sources 20a and at least one of the sources 20b, so as to simultaneously project, onto the upper surface of the loading unit 101, a corresponding line of light 25a and a corresponding line of light 25b.

According to figure 2, the unit 30 turns on one single light source 20a and one single light source 20b, so as to project one single line 25a and one single line 25b, which intersect in a point, which identifies the compartment 14 to be accessed. In other words, the intersection between the lines 25a and 25b defines a light pointer with the shape of a cross, which indicates to the user where to carry out the picking/depositing operation.

Alternatively, in order to reduce the light intensity of the light beams 18a, 18b, the unit 30 turns on the sources 20a and 20b in an intermittent and alternated manner and with a frequency that is such as to allow the user to equally perceive an intersection between the lines 25a and 25b.

The crossings or intersections present in the grid of lines of light, which, as a whole, can be projected by the device 16, represent the total number of light pointers which could be obtained. The distance between these intersections corresponds to the distance between the sources 20a and 20b and represents the resolution between the light pointers than can be projected by the device 16 onto the loading unit 101.

According to a variant, which is shown in figure 4, the unit 30 simultaneously turn on two sources 20a and two sources 20b so as to form two lines of light 25a and two lines of light 25b, which are transversal (preferably orthogonal) to the two lines 25a.

In this way, the four projected lines of light define the perimeter of a rectangular or square area 33, which corresponds to the volume or compartment 14 to be accessed. The distance between the sources 20a and 20b, in this case, defines the dimension of the area 33 and, hence, the resolution of the light signal that can be obtained on the loading unit 101.

With reference to figure 2, the station 2 further comprises an interface device 35, which communicates with the unit 104 so as to show the user possible instructions for the picking/depositing operations to be carried out and so as to receive possible items of information, instructions and/or confirmations from the user itself.

At the end of the picking and/or depositing operations, the unit 30 turns off all the sources 20a, 20b, while waiting for new instructions from the user and/or the unit 104.

Owing to the above, the advantages of the device 16 are evident.

Thanks to the fact that the sources 20 are fixed, the device 16 is extremely simple and economic, as it does not have moving parts.

At the same time, the fact of emitting light beams 18a, 18b and, hence, of projecting lines of light 25a, 25b, which are transversal to one another, allows manufacturers to limit the number of sources 20a, 20b for the same resolution and/or the same number of light pointers on the upper surface of the loading unit 101 with respect to solutions in which punctiform sources are provided, which only emit straight and vertical light rays. For example, in figure 3 fourteen sources 20a and nine sources 20b are provided, namely a total of twenty-three sources, which can indicate one hundred and twenty-six pointers defined by the crossings of the lines of light 25a, 25b or can indicate numerous signalling areas 33 with a very high signalling flexibility.

Furthermore, when the unit 30 projects two lines of light 25a and two lines o light 25b, so as to define the signalling area 33, it is possible to indicate the perimeter of two or more contiguous compartments 14 in an effective and unequivocal manner.

Thanks to the features of the device 16, in particular of the sources 20, no parallax problems arise. Furthermore, the configuration of the operating settings of the device 16 is carried out during the installation phase based on the features of the picking/depositing station where the device 16 is installed, with no need for subsequent adjustments.

Indeed, the effectiveness in the signalling of the compartments 14 is influenced in a merely marginal manner by the dimensions of the loading unit 101, by the height of the stored articles or by the vertical distance between the loading unit 101 and the ceiling 8.

Hence, the initial settings of the device 16 do not need to be reconfigured based on the dimensions and/or the position of the loading unit 101 in the seat 13.

Therefore, the device 16 can effectively be used on loading units having different heights and/or in picking/depositing stations with "two levels", namely stations provided with two support devices arranged at different heights for the positioning of two distinct loading units.

Finally, owing to the above, it is evident that the device 16 and the station 2 described above, with reference to the accompanying drawings, can be subjected to changes and variations, without for this reason going beyond the scope of protection of the invention as set forth in appended claims.

For example, the row 22, instead of being arranged in the area of the ceiling 8, could be arranged along the wall 6 and/or the row 21 could be arranged along one of the sides 7.

Furthermore, the rows 21, 22 could be arranged so as to form the sides of a rectangle or a square, instead of being arranged in a cross-like manner.

Finally, the unit 30 could simultaneously turn on more than two sources 20a and more than two sources 20b so as to form a grid of lines of light on the surface of the loading unit 101, in particular during the installation of the device 16 in order to check the parallelism between the lines of light 25a as well as between the lines of light 25b, so that checking or correcting the installation of the sources 20 becomes easier.

## Claims

1. A light indicating device (16) for a picking/depositing station (2) for an automated warehouse (1), the device comprising:
- support means (17);
- light emitting means (20) supported by said support means (17) and configured to emit light beams (18a, 18b) extending on respective planes, for displaying lines of light (25a, 25b) on a surface arranged, in use, in a position facing the light indicating device (16);
- a control unit (30) configured to turn on/off said light emitting means (20);
**characterised in that** said light emitting means (20) comprise light sources, fixed in respect to said support means (17) and comprising:
- first light sources (20b) arranged along a first row (21) and configured in order to respectively emit first light beams (18b) configured like a fan or like a light blade along respective first planes parallel to one another and transversal to said first row (21), so as to display on said surface, in use, respective first lines of light (25a); and
- second light sources (20a) arranged along a second row (22) transversal to said first row (21) and configured in order to respectively emit second light beams (18a) configured like a fan or like a light blade along respective second planes parallel to one another and transversal to said second row (22), so as to display on said surface, in use, respective second lines of light (25a);
and **in that** said control unit (30) is configured to turn on at least one of said first light sources (20b) and at least one of said second light sources (20a), so as to simultaneously display one of said first lines of light (25a) and one of said second lines of light (25a), which intersect in a point on said surface.

2. The device according to claim 1, **characterised in that** said light emitting means (20) are defined by said first light sources (20b) and by said second light sources (20a) .

3. The device according to claim 1 or 2, **characterised in that** said control unit (30) is configured in order to simultaneously turn on only one of said first light sources (20b) and only one of said second light sources (20a).

4. The device according to claim 1 or 2, **characterised in that** said control unit (30) is configured in order to turn on two of said first light sources (20b) and two of said second light sources (20a), in order to form respective lines of light which define the perimeter of a signalling area (33).

5. The device according to any one of the previous claims, **characterised in that** said first and second rows (21, 22) are orthogonal to one another.

6. The device according to claim 5, **characterised in that** said first and second rows (21, 22) are arranged in order to form a cross.

7. The device according to any one of the previous claims, **characterised in that** said first light beams (18b) extend on planes orthogonal to said first row (21).

8. The device according to any one of the previous claims, **characterised in that** said second light beams (18a) extend on planes orthogonal to said second row (22).

9. A picking/depositing station (2) for an automated warehouse (1), the station (2) comprising:
- a support structure (3) defining a seat (13) designed to receive at least one loading unit (101); and
- a light indicating device (16) achieved according to any one of the previous claims for displaying at least two lines of light (25a, 25b) intersecting one another in a point on said loading unit (101).

10. The station according to claim 9, **characterised in that** said fixed structure (3) comprises:
- a compartment (12) open at the front, so as to allow a user access thereto;
- a ceiling (8) delimiting said compartment (12) at the top and arranged above said seat (13);
at least one of said first and second rows (21, 22) being arranged on said ceiling (8).
